# EUROPEAN PATENT SPECIFICATION

(11) **EP 2 660 388 B1**
(45) Date of publication and mention of the grant of the patent: **19.09.2018**
(21) Application number: 13382163.7
(22) Date of filing: 02.05.2013
(51) Int. Cl.: D21C 5/02, D21B 1/02, D21B 1/08, D21H 11/14, D21H 11/18

(54) **Procedure for obtaining nanofibrillated cellulose from recovered paper**
Verfahren zur Herstellung von nanofibrillierter Cellulose aus wiedergewonnenem Papier
Procédé d'obtention de cellulose nanofibrillée à partir de papier récupéré

(30) Priority: 03.05.2012 ES 201230663
(43) Date of publication of application: 06.11.2013
(73) Proprietor: SOCIEDAD ANÓNIMA INDUSTRIAS CELULOSA ARAGONESA - SAICA, 50015 Zaragoza (ES)
(72) Inventor: Gonzalez Alonso, Susana, 50015 Zaragoza (ES); Crespo Miñana, Ana Cristina, 50007 Zaragoza (ES); Gonzalez Alvarez, Azucena, 50015 Zaragoza (ES); Gonzalez Miguel, Pablo, 50013 Zaragoza (ES); Mena Diaz de Corcuera, Alberto, 50015 Zaragoza (ES); Ibarz Ric, Gemma, 50004 Zaragoza (ES)
(74) Representative: Capitán García, Maria Nuria

(56) References cited:
- WO-A1-2011/051882
- WO-A1-2011/055148
- WO-A2-2010/149711
- LV-B- 11 867
- US-A- 4 483 743

## Description

### OBJECT OF THE INVENTION

It is an object of the present invention, as stated by the title of the invention, a procedure for obtaining nanofibrillated cellulose from recycled or recovered paper, or from recovered paper pulp or from recovered cellulose.

The present invention is characterised by, the raw material and the technical features of some of the stages, allowing obtain nanofibrillated cellulose from recovered paper, where the raw material consisting of recycled or recovered paper or recovered paper pulp or recovered cellulose.

Therefore, the present invention is related with procedures for obtaining nanofibrillated cellulose.

### BACKGROUND OF THE INVENTION

Different documents (patents and patent applications) describing different procedures for obtaining nanofibrillated cellulose are known in the state of the art.

In patent US4483743, nanofibrillated cellulose is obtained from a liquid suspension of virgin cellulose that is subjected to a warming-up pre-treatment of 50 °C to 80 °C, being processed by passing it through a high pressure homogeniser.

Patent application WO2011051882 A1 describes a procedure for obtaining nanofibrillated cellulose obtained from cotton, cereals, hard and soft woods that are subjected to a pre-treatment with enzymes, being processed by a twin-screw extruder.

In patent application WO2010/149711 A2, the raw material from which nanofibrillated cellulose is obtained is recycled white paper, colour paper of different colours or bleached papers, which are subjected to a previous treatment comprising the use of a paper shredder with an interchangeable hammer mill suitable for the preparation of hemp, cereal straw and other lignocellulosic materials, related to the separation of foreign (opposite) material (wood, metal, stone, plastics, etc.) and a cleaning system, including the elimination of powder.

Patent application WO2011055148 describes an apparatus and a method for processing cellulose fibres, which leaves the source of cellulosic material very open, not using just paper, using some pre-treatments similar to those from the above patent.

Patent application WO 2010149711 A discloses a method and apparatus for defibrillating cellulose fibres, achieved through single or multiple passes of raw or pre-processed cellulose fibre slurry, with a preferred solid material consistency range of 35% to 55% through twin-screw fibre processing machines.

Patent application LV 11867 A disclosed a method to obtain microcrystal cellulose from non dry wood mechanical processing wastes (for example sawdust), by using a single-stage vapour cracking process without extra mechanical or chemical after-treatment.

However, none of the above patents or patents applications describe a procedure for obtaining nanofibrillated cellulose starting from recovered paper, obtaining nanofibrillated cellulose having similar features to that obtained from virgin cellulose.

Therefore, it is an object of the present invention to develop a procedure for obtaining nanofibrillated cellulose that, starting from recycled material (recycled or recovered paper, or recovered paper pulp or recovered cellulose) obtains cellulose with similar features to that obtained from virgin cellulose, developing a procedure as the one described next and contained in the first claim.

### DESCRIPTION OF THE INVENTION

The object of the invention is a procedure for obtaining nanofibrillated cellulose from recycle or recovered paper or from recovered paper pulp or from recovered cellulose. The distinguishing feature with respect to the state of the art, is not just the fact of starting from recovered paper, or from recovered paper pulp or from recovered cellulose but the stages where the raw material has had to be treated in order to obtain nanofibrillated cellulose with similar features to that obtained from virgin fibre.

For that, the raw material needs to undergo a procedure comprising a chemical pre-treatment stage, and a second mechanical treatment stage.

The chemical pre-treatment stage aims two objectives, on the one hand the weakening of cellulose fibre and, on the other hand, the elimination of inorganic fillers that can act as promoters of agglomeration of fibres, namely, purification is aimed, by removing mineral fillers without attacking the fibres through the elimination of carbonates, among other mineral fillers.

Among all the products tested and sought, it is thought that the product that cleans all the fibres of the original cellulosic material of most of the mineral filler is acetic acid, the raw material being immersed in an acetic acid dilution (pure acetic acid that is a clear and colourless liquid has been diluted with water) for a while and subjected to a stirring process.

The second stage consists of a mechanical treatment in which some shear forces are applied in order to longitudinally and completely separate the cellulose fibres already weakened in the previous step.

The application of shear forces for longitudinally separating the fibres can take place through a mixer or similar equipment for creating enough shearing on the cellulose pulp.

Therefore, the objective of the invention is a procedure for obtaining nanofibrillated cellulose starting for a raw material consisting of recycled or recovered paper or recovered paper pulp or recovered cellulose, wherein the procedure comprises the following stages:
1) immersing the raw material in dilution of acetic acid in a range of 10% to 50% concentration by dilution with water of pure acetic acid,
2) stirring the raw material immersed in the acetic acid dilution, the time will be in correspondence with the acetic acid concentration,
3) subjecting the cellulosic material to a mechanical process of separating already weakened cellulose fibres, by means of shear forces.

### PREFERRED EMBODIMENT OF THE INVENTION

For the preferred embodiment of the invention, the acetic acid dilution in which the raw material (recovered paper, or recovered paper pulp or recovered cellulose pulp) is immersed will be in a concentration of 10% to 50% by volume dilution of pure acetic acid, depending on the time the raw material is immersed in the dilution. The lower is the dilution, the higher is the immersion time, and the higher is the concentration of acetic acid dilution, the lower is the immersion time what means that for a low concentration acetic acid dilution the time the raw material is immersed will be higher than when it is used a more concentrated acetic acid dilution.

The time the raw material remains immersed in the acetic acid dilution will be in an inverse relationship to the concentration of acetic acid dilution, noting just as a reference and not a limiting value that, for a dilution of acetic acid of 35% concentration, the suitable time of immersion for the raw material will be of 20 minutes.

In no case the data of the acetic acid dilution in which the raw material is immersed and the time required must be taken as limiting, being adjusted according to convenience and taking into account the relationship (higher concentration, lower is the time required while lower the concentration higher is the time required) of the two, being able to reach more accurate values after characterising the cellulose obtained by analysing the physical-chemical features.

As for the mechanical processing for the longitudinal separation of fibres, it takes place through the application of shear forces, which in turn can be applied, among other methods, by means of a mixer or similar equipment capable of creating enough shearing on cellulose pulp. The speed of the mixer will be preferably but not limited, in the range of 20 to 600 rpm.

The obtained pulp humidity will be in the range of 30% to 50%, while the temperature at which the process is performed will be from 25 ° C to 95 ° C.

## Claims

1. Procedure for obtaining nanofibrillated cellulose **characterised in that** the procedure starts from a raw material consisting of recycled or recovered paper or recovered paper pulp or recovered cellulose, it comprises the stages of
immersing the raw material in a dilution of acetic acid in a range of 10% to 50%, followed by,
stirring the raw material immersed in the acetic acid dilution, and finishing by,
subjecting the cellulosic material to a mechanical process of longitudinal separation of the fibres that takes place through the application of shear forces;
wherein the time that the raw material remains in the acetic acid dilution is in an inverse relationship to the concentration of acetic acid dilution, so the lower is the concentration of acetic acid dilution, the higher is the immersion time, and the higher is the concentration of acetic acid dilution, the lower is the immersion time.

2. Procedure for obtaining nanofibrillated cellulose, according to claim 1, **characterised in that** the application of shear forces takes place through a mixer capable of creating enough shearing on the cellulosic material immersed in the acetic acid dilution.

3. Procedure for obtaining nanofibrillated cellulose, according to claim 2, **characterised in that** the speed of the mixer will be in the range of 20 to 600 rpm.

## Patentansprüche

1. Verfahren zum Erhalten nanofibrillierter Cellulose, **dadurch gekennzeichnet, dass** das Verfahren von einem Rohmaterial aus recyceltem oder Altpapier oder Altpapierzellstoff oder wiedergewonnener Zellulose ausgeht und die Stufen umfasst
Eintauchen des Ausgangsmaterials in eine Essigsäureverdünnung in einem Bereich von 10 % bis 50 %, gefolgt von
Rühren des in die Essigsäureverdünnung eingetauchten Rohmaterials und Endbearbeiten durch
Unterziehen des Cellulosematerials einem mechanischen Verfahren der Längstrennung der Fasern, der durch die Anwendung von Scherkräften stattfindet;
wobei die Zeit, in der das Rohmaterial in der Essigsäureverdünnung verbleibt, in einer umgekehrten Beziehung zur Konzentration der Essigsäureverdünnung steht, d. h., je niedriger die Konzentration der Essigsäureverdünnung ist, desto höher ist die Eintauchzeit, und je höher die Konzentration der Essigsäureverdünnung ist, desto niedriger ist die Eintauchzeit.

2. Verfahren zum Erhalten nanofibrillierter Cellulose nach Anspruch 1, **dadurch gekennzeichnet, dass** die Anwendung von Scherkräften durch einen Mischer erfolgt, der in der Lage ist, an dem in die Essigsäureverdünnung eingetauchten Cellulosematerial genügend Scherung zu erzeugen.

3. Verfahren zum Erhalten nanofibrillierter Cellulose nach Anspruch 2, **dadurch gekennzeichnet, dass** die Drehzahl des Mischers im Bereich von 20 bis 600 1/min liegt.

## Revendications

1. Procédure d'obtention de cellulose nanofibrillée, **caractérisée en ce que** la procédure part d'une matière première constituée de papier recyclé ou récupéré ou de pâte à papier récupérée ou de cellulose récupérée, et qu'elle comprend les étapes consistant à
immerger la matière première dans une dilution d'acide acétique de 10 % à 50 %, puis
agiter la matière première immergée dans la dilution d'acide acétique, et, pour terminer,
soumettre le matériau cellulosique à un processus mécanique de séparation longitudinale des fibres qui se réalise par l'application de forces de cisaillement ;
dans laquelle le temps pendant lequel la matière première reste dans la dilution d'acide acétique est inversement proportionnel à la concentration de la dilution d'acide acétique, de sorte que, plus la concentration de la dilution d'acide acétique est faible, plus le temps d'immersion est long et plus la concentration de la dilution de l'acide acétique est élevée, plus le temps d'immersion est court.

2. Procédure d'obtention de cellulose nanofibrillée selon la revendication 1, **caractérisée en ce que** l'application des forces de cisaillement se fait par un mélangeur capable de créer un cisaillement suffisant sur le matériau cellulosique immergé dans la dilution d'acide acétique.

3. Procédure d'obtention de cellulose nanofibrillée selon la revendication 2, **caractérisée en ce que** la vitesse du mélangeur sera comprise dans la plage de 20 à 600 tr/min.
